# EUROPEAN PATENT SPECIFICATION

(11) **EP 2 229 810 B1**
(45) Date of publication and mention of the grant of the patent: **11.07.2012**
(21) Application number: 09155480.8
(22) Date of filing: 18.03.2009
(51) Int. Cl.: A01F 15/07

(54) **Round baler having a web wrap apparatus**
Rundballenpresse mit einer Bahnwickelvorrichtung
Presse à balles rondes dotée d'un appareil d'enrubannage

(43) Date of publication of application: 22.09.2010
(73) Proprietor: Deere & Company, Moline, IL 61265 (US)
(72) Inventor: Paillet, Frédéric, 70100 Arc-les-Gray (FR); Gresset, Pascal, 70100 Arc-les-Gray (FR); Viaud, Jean, 70100 Gray (FR); Chapon, Emmanuel, 70100 Champvans (FR); Beaufort, David, 70100 Arc-les-Gray (FR); Guerin, Sébastien, 10200 Bar-Sur-Aube (FR)
(74) Representative: Magin, Ludwig Bernhard

(56) References cited:
- EP-A- 0 766 912
- EP-A- 0 807 380
- US-A1- 2004 016 204

## Description

This invention relates to a round baler having a web wrap apparatus comprising a feeder to move web into a bale chamber along a motion means, having at least one protrusion.

EP 766 912 discloses a round baler having a net feed device, moveable between a waiting position and a feeding position. In the feeding position the feed device enters a space between a roll and a chain slat conveyor. The chain slat conveyor has transverse slats, bars or shafts with spaces between. The roll has several axially extending bars on its shell. EP 766 912 A1 discloses an apparatus and method for wrapping round bales, whereas a so-called duck bill enters into a space between a roll with elongate bars and a roll with sprockets over which an apron in the form of a chain with elongate bars is idled. As both are rotating in the same direction one surface is moving into and one is moving out of said space. Underneath the roll with the sprockets a shield element is provided to shield the apron, in particular to avoid air turbulences created by the apron and affecting the movement of net entered into said space. Underneath the shield element a shear bar is provided which acts as a stop against an upward movement of the duck bill at the end of its stroke. At the end of the stroke two clamping members of the duck bill and guiding the net between themselves terminate exactly above the lower roll and risk to be drawn against the moving bars underneath, when tension is created in the net.

This device has the risk, that crop moved out of the bale chamber rests on top of the shield element and will create a blockage or deformation of the shield element. Another risk is that the clamping members are drawn onto the bars and rattle, which will destroy them over time and creates unwanted noise.

This problem is solved in an innovative way by means of the teaching of claim 1, whereas advantageous features further developing the invention are given in the claims related to claim 1.

Using one or more anti-interference distance means assures, that the feeder cannot get to the protrusion. This anti interference distance means is provided in the area of the protrusion and is different from a travel limiter for the feeder, since latter may not control the movement of the leading part of the feeder. The motion means can be a roll delimiting the bale chamber, a roll feeding the web into a gap elsewhere, a belt with slats, a chain with bars, etc. By means of the invention anti-interference distance means on the feeder or the motion means the feeder will not only be kept away from the motion means, like the rolls, but crop in this area cannot accumulate, since the feeder and/or the motion means is moving and crop will fall down.

If the anti-interference distance means are connected to the motion means, which could happen in any way ex factory or installed afterwards, they are at least as high as any protrusion on said moving part. This will assure, that the feeder cannot hit the protrusion and get destroyed or pushed back from slats or bars moving in the opposite direction as the feeder or rattles on them, if they move in the same direction.

As an alternative the anti interference means may be formed as mobile guides, like bars, rails, etc. provided to prohibit access to the protrusions and normally being fixed to a frame. This could be a guide, if the motion part itself is provided on a moving frame, etc.

Protrusions may exist in many different kinds and on many different kinds of carriers. E.g. motion means may be formed as a roll and protrusions are formed as bars welded or bolted onto a cylindrical surface of it or are formed into a shell of such a roll, like pressed ribs. Protrusions may also exist in slats of a chain and slat conveyor or on bars of belts, etc.

Such anti interference distance means may be rings welded or bolted onto a cylindrical surface of a roll or are formed into said surface. They may intersect or overlap the protrusion or be located aside of them. They may also be made of a different material, since they need not be as hard as the protrusions. In the case of a chain and slat conveyor anti interference means may be formed as rings connected to and or rotating with wheels or sprockets idling said chain and slat conveyor. One or more such anti interference distance means may be provided along the length of the motion means, like at the outer ends, in the center, close to the outer ends.

Since a mechanical conflict may arise between a single motion means and the feeder, this invention could be provided also, where only one motion means is given, like at the crop entrance to the bale chamber, whereas the direction of movement may be either way.

The invention is even more important, where the feeder enters a gap between two adjacent motion means, leaving a close gap between them only, since this may lead to an interaction at both sides of the gap. Especially if the feeder is sort of a duck-bill with one or more moveable parts, which may not return to their position, e.g. because foreign objects block them.

The invention could also be used apart from a gap or crop entrance, but at a place, where web is caught and fed to the bale chamber at a remote end.

Since it is important only to avoid a contact between the feeder and the motion means, the anti interference distance means provided on the feeder could be formed as fingers, tines, cut-outs of a rigid or moveable portion of the feeder or components thereof etc. contacting areas on the motion means, which do not have protrusions. Advantageously the anti interference distance means or the motion means have low friction surfaces, like Teflon coverage, which avoid sparks or wear, when they contact each other; plastic may be used as well.

Hereafter two embodiment of the invention are described in more detail and in relation to the drawing. It is shown in:
Fig. 1 a round baler in schematic side view provided with a web wrap apparatus and
Fig. 2 motion means of the round baler with a gap interbetween and a feeder approaching said gap,
Fig. 3 motion means of the round baler with different arrangements of anti-interference distance means, and
Fig. 4 an alternative embodiment with anti interference distance means on the feeder.

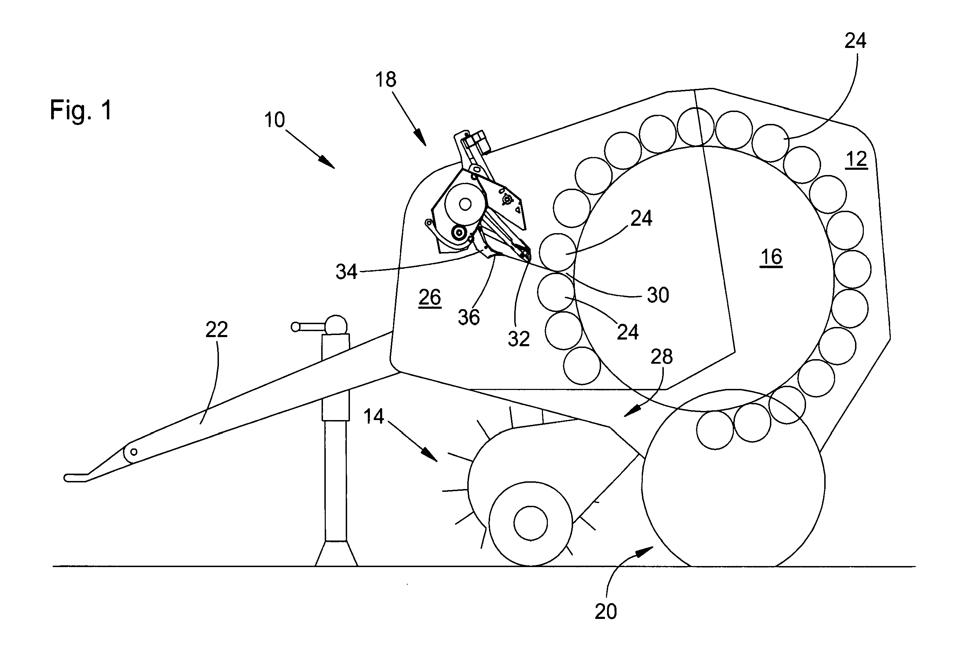

Figure 1 shows a round baler 10, which has a chassis 12, a pick-up 14, a bale chamber 16, a web wrap apparatus 18, an axle with wheels 20, a tongue 22 and motion means 24.

The round baler 10 is of ordinary kind in a fix chamber version, but could be a variable chamber baler, too.

The chassis 12 rests on the axle with wheels 20, carries the pick-up 14 and can get connected to a tractor or the like by means of the tongue 22. The chassis 12 has substantially one or multiple part side walls 26, which are apart from each other to receive interbetween them the bale chamber 16, all or part of the web wrap apparatus 18 and the motion means 24.

The pick-up 14 picks up crop from the ground and delivers it to the bale chamber 16 through a crop inlet 28 between motion means 24.

The bale chamber 16 is covered substantially by the motion means 24 on the circumference and by the side walls 26 on the face side. Beside the crop inlet 28 a gap 30 is provided between the motion means 24, through which web 32 may be fed into the bale chamber 16. The bale chamber 16 serves to form a cylindrical bale of hay, straw or the like, which will be covered by the web 32 of plastic, net, paper or similar. The motion means 24 in this embodiment are in the form of steel rolls rotatably received in the sidewalls 26 and extending perpendicular to them. These motion means 24 are arranged on a circle.

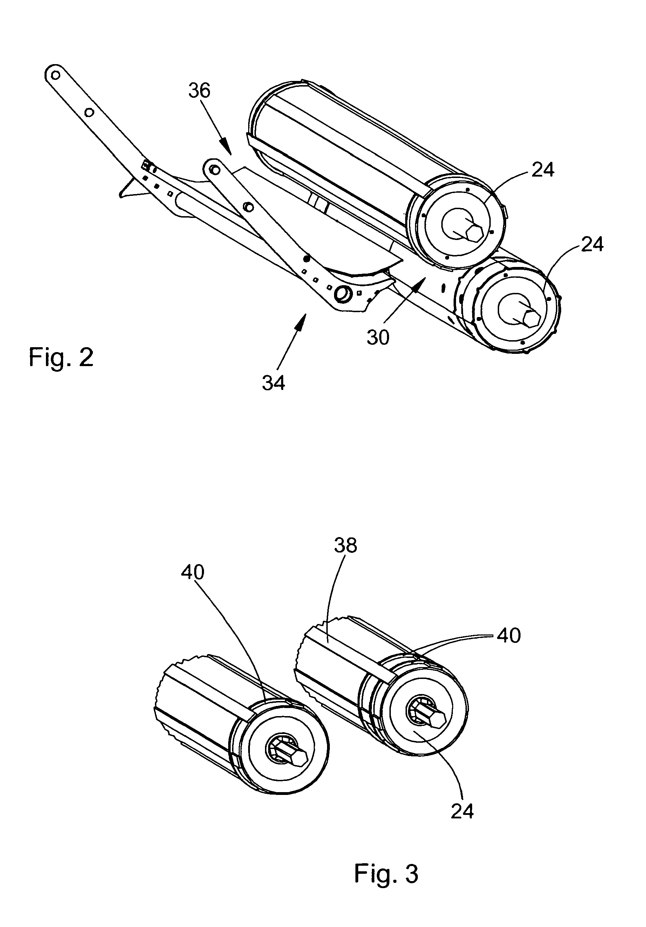

The web wrap apparatus 18 will not be described in detail, since itself is known in the art, e.g. from European patent application 08155506.2 filed on 30-Apr-2008. It is sufficient to point out, that the web wrap apparatus 18 has a feeder 34 like a so-called duck-bill with a carrier 36, like a mouthpiece or comb or the like moved into the gap 30 with a down hanging piece of web 32 to be inserted into a bale chamber 16. This is shown substantially in figure 2.

Figure 3 shows two versions of a motion means 24, which is formed as a roll. Such motion means 24 are provided on at least one side of the gap 30. The motion means 24 are provided with axially extending protrusions 38; those may show also an inclination to the axis of the motion means 24 and may be bars welded or bolted to a roll body or ribs. Provided are also anti interference distance means 40 on the circumference of the motion means 24. These anti interference distance means 40 are formed as rings of at least the same height as the protrusions 38 or even slightly higher. As it is shown in figure 2 one or more anti interference distance means 40 may be provided and they may be provided at the end of the protrusions 38 or intersecting them or may be provided further away from the end. Depending on the rotation of the bale in bale chamber 16 at least one of the motion means 24 forming the gap 30 rotates away from the bale chamber 16 in the plane of the gap 30. Obviously gap 30 is very narrow and leaves little space for carrier 36. The dimensions of the gap 30, the carrier 36, the protrusions 38 and the anti interference distance means 40 are chosen such, that in case of a mechanical deformation of the feeder 34, the carrier 36 would contact the anti interference distance means 40 but could not reach the protrusions 38. Thus it would neither be pushed out of the gap 30 nor destroyed.

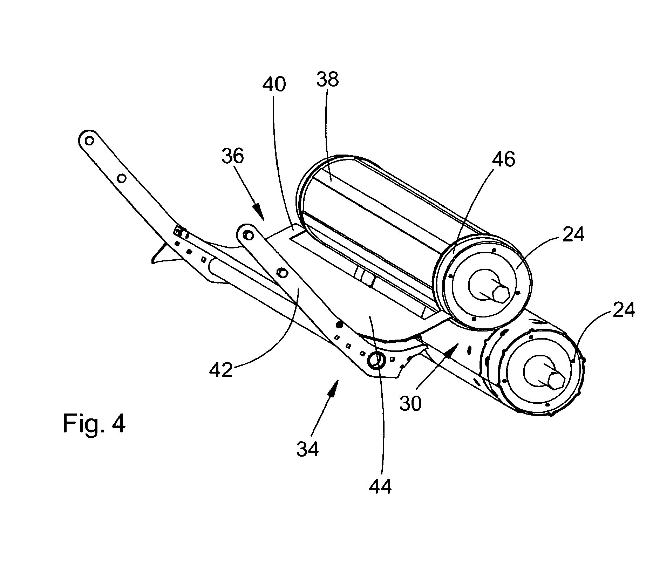

According to the alternative embodiment shown in figure 4 the feeder 34 has a rigid portion 42 and a moveable portion 44 pivotably attached to said rigid portion. The anti interference distance means 40 are formed as extensions of the moveable portion 44. like fingers. The motion means 24 have in their end areas contact areas 46, to which the protrusions do not extend. This smoth and even ring like area and the anti interference distance means are located opposite to each other, such, that in a case, in which the anti interference distance means 40 would hit the motion means 24, they would contact the contact area 46 and avoid a contact with the protrusions 38. Teflon, plastic or other material may be provided on the anti interference distance means 40 or on the contact area 46, which avoid creating sparks or wear in the case of contact. The anti interference distance means 40 may also be provided on the rigid portion 42 instead of.

## Claims

1. Round baler (10) having a web wrap apparatus (18) comprising a feeder (34) to move web (32) into a bale chamber (16) along a motion means (24), having at least one protrusion (38), **characterized in that** anti-interference distance means (40) controlling the movement of the leading part of the feeder (34) are provided on the feeder (34) or on the motion means (24) to avoid the feeder (34) contacting the protrusion (38).

2. Round baler according to claim 1, **characterized in that** the anti-interference distance means (40) on the motion means (24) are at least as high as the protrusion (38).

3. Round baler according to claim 1, **characterized in that** the anti interference means (40) are formed as mobile guides covering the motion means (24) to the extent necessary to prohibit access to the protrusion (38).

4. Round baler according to one or more of the preceding claims, **characterized in that** the motion means (24) is formed as a roll and protrusion (38) are formed as bars welded or bolted onto or formed into a shell of the motion means (24).

5. Round baler according to one or more of the preceding claims, **characterized in that** the motion means (24) is formed as a roll and anti interference means (24) are formed as rings welded or bolted onto or formed into a shell of the motion means (24).

6. Round baler according to one or more of the preceding claims, **characterized in that** the motion means (24) is formed as a chain and slat conveyor and **in that** anti interference means (24) are formed as rings connected to and/or rotating with wheels idling said motion means (24).

7. Round baler according to one or more of the preceding claims, **characterized in that** the motion means (24) partly cover the bale chamber (16).

8. Round baler according to one or more of the preceding claims, **characterized in that** two motion means (24) partly covering the bale chamber (16) are located on opposite sides of a gap (30), whereas the motion means are moving in opposite directions with respect to the gap (30).

9. Round baler according to one or more of the preceding claims, **characterized in that** the motion means (24) are provided to transport web (32) to a gap (30) ending in the bale chamber (16).

10. Round baler according to one or more of the preceding claims, **characterized in that** the motion means (34) is provided with a contact area (46) free of protrusions (38).

## Patentansprüche

1. Rundballenpresse (10) mit einer Bahnwickelvorrichtung (18), umfassend eine Zuführvorrichtung (34) zum Bewegen der Bahn (32) in einen Pressraum (16) entlang einem Bewegungsmittel (24), das mindestens einen Vorsprung (38) aufweist, **dadurch gekennzeichnet, dass** Antibehinderungsabstandsmittel (40), das die Bewegung des vorderen Teils der Zuführvorrichtung (34) steuert, an der Zuführvorrichtung (34) oder an dem Bewegungsmittel (24) vorgesehen sind, um zu verhindern, dass die Zuführvorrichtung (34) den Vorsprung (38) berührt.

2. Rundballenpresse nach Anspruch 1, **dadurch gekennzeichnet, dass** die Antibehinderungsabstandsmittel (40) am Bewegungsmittel (24) mindestens so hoch sind wie der Vorsprung (38).

3. Rundballenpresse nach Anspruch 1, **dadurch gekennzeichnet, dass** die Antibehinderungsabstandsmittel (40) als bewegliche Führungen ausgebildet sind, die das Bewegungsmittel (24) in dem erforderlichen Ausmaß bedecken, um Zugang zum Vorsprung (38) zu verhindern.

4. Rundballenpresse nach einem oder mehreren der vorhergehenden Ansprüche, **dadurch gekennzeichnet, dass** das Bewegungsmittel (24) als eine Rolle ausgebildet ist, und Vorsprünge (38) als Stäbe ausgebildet sind, die mit einem Mantel des Bewegungsmittels (24) verschweißt oder damit verschraubt oder darin ausgebildet sind.

5. Rundballenpresse nach einem oder mehreren der vorhergehenden Ansprüche, **dadurch gekennzeichnet, dass** das Bewegungsmittel (24) als eine Rolle ausgebildet ist, und Antibehinderungsmittel (40) als Ringe ausgebildet sind, die mit einem Mantel des Bewegungsmittels (24) verschweißt oder damit verschraubt oder darin ausgebildet sind.

6. Rundballenpresse nach einem oder mehreren der vorhergehenden Ansprüche, **dadurch gekennzeichnet, dass** das Bewegungsmittel (24) als ein Scharnierbandkettenförderer ausgebildet ist, und die Antibehinderungsmittel (40) als Ringe ausgebildet sind, die mit 2wischenrädern des Bewegungsmittels (24) verbunden sind und/oder sich damit drehen.

7. Rundballenpresse nach einem oder mehreren der vorhergehenden Ansprüche, **dadurch gekennzeichnet, dass** das Bewegungsmittel (24) den Pressraum (16) teilweise bedeckt.

8. Rundballenpresse nach einem oder mehreren der vorhergehenden Ansprüche, **dadurch gekennzeichnet, dass** zwei Bewegungsmittel (24), die den Pressraum (16) teilweise bedecken, auf einander gegenüberliegenden Seiten eines Spalts (30) positioniert sind, während sich die Bewegungsmittel in entgegengesetzten Richtungen bezüglich des Spalts (30) bewegen.

9. Rundballenpresse nach einem oder mehreren der vorhergehenden Ansprüche, **dadurch gekennzeichnet, dass** die Bewegungsmittel (24) zum Transportieren der Bahn (32) zu einem in dem Pressraum (16) endenden Spalt (30) vorgesehen sind.

10. Rundballenpresse nach einem oder mehreren der vorhergehenden Ansprüche, **dadurch gekennzeichnet, dass** das Bewegungsmittel (24) mit einem Kontaktbereich (46) versehen ist, der keine Vorsprünge aufweist.

## Revendications

1. Presse à balles rondes (10) ayant un appareil d'enrubannage à bande (18) comprenant un dispositif d'alimentation (34) pour déplacer la bande (32) dans une chambre à balles (16) le long d'un moyen de déplacement (24), ayant au moins une saillie (38), **caractérisée en ce que** des moyens d'espacement anti-interférence (40) régulant le mouvement de la partie avant du dispositif d'alimentation (34) sont prévus sur le dispositif d'alimentation (34) ou sur le moyen de déplacement (24) pour empêcher que le dispositif d'alimentation (34) ne vienne en contact avec la saillie (38).

2. Presse à balles rondes selon la revendication 1, **caractérisée en ce que** les moyens d'espacement anti-interférence (40) sur le moyen de déplacement (24) sont au moins aussi hauts que la saillie (38).

3. Presse à balles rondes selon la revendication 1, **caractérisée en ce que** les moyens anti-interférence (40) sont formés sous forme de guides mobiles recouvrant le moyen de déplacement (24) dans la mesure nécessaire pour empêcher l'accès à la saillie (38).

4. Presse à balles rondes selon l'une quelconque ou plusieurs des revendications précédentes, **caractérisée en ce que** le moyen de déplacement (24) est formé sous la forme d'un rouleau et les saillies (38) sont formées sous la forme de barres soudées ou boulonnées sur une coque du moyen de déplacement (24) ou formées dans ladite coque.

5. Presse à balles rondes selon l'une quelconque ou plusieurs des revendications précédentes, **caractérisée en ce que** le moyen de déplacement (24) est formé sous la forme d'un rouleau et les moyens anti-interférence (40) sont formés sous forme de bagues soudées ou boulonnées sur une coque du moyen de déplacement (24) ou formées dans ladite coque.

6. Presse à balles rondes selon l'une quelconque ou plusieurs des revendications précédentes, **caractérisée en ce que** le moyen de déplacement (24) est formé sous la forme d'un convoyeur à chaîne et lattes et **en ce que** les moyens anti-interférence (40) sont formés sous forme de bagues connectées à des roues et/ou tournant avec des roues mettant en roue libre ledit moyen de déplacement (24).

7. Presse à balles rondes selon l'une quelconque ou plusieurs des revendications précédentes, **caractérisée en ce que** le moyen de déplacement (24) recouvre en partie la chambre à balles (16).

8. Presse à balles rondes selon l'une quelconque ou plusieurs des revendications précédentes, **caractérisée en ce que** deux moyens de déplacement (24) recouvrant en partie la chambre à balles (16) sont situés sur des côtés opposés d'un espace (30), tandis que les moyens de déplacement se déplacent dans des directions opposées par rapport à l'espace (30).

9. Presse à balles rondes selon l'une quelconque ou plusieurs des revendications précédentes, **caractérisée en ce que** les moyens de déplacement (24) sont prévus pour transporter la bande (32) jusqu'à un espace (30) se terminant dans la chambre à balles (16).

10. Presse à balles rondes selon l'une quelconque ou plusieurs des revendications précédentes, **caractérisée en ce que** le moyen de déplacement (24) est pourvu d'une zone de contact (46) exempte de saillies (38).
